Europäisches Patentamt

European Patent Office

Office européen des brevets

(11) Publication number: **0 134 860**
**B1**

## (12) EUROPEAN PATENT SPECIFICATION

(45) Date of publication of patent specification: **07.09.88**

(21) Application number: **83305581.7**

(22) Date of filing: **21.09.83**

(51) Int. Cl.⁴: **H 04 L 27/06, H 04 L 7/10**

(54) Improved modem signal acquisition technique.

(43) Date of publication of application:
**27.03.85 Bulletin 85/13**

(45) Publication of the grant of the patent:
**07.09.88 Bulletin 88/36**

(84) Designated Contracting States:
**DE FR GB IT NL SE**

(56) References cited:
**DE-A-2 911 845**
**US-A-3 956 623**
**US-A-3 962 637**
**US-A-3 971 996**
**US-A-3 978 407**
**US-A-4 035 735**
**US-A-4 253 184**

**PATENTS ABSTRACTS OF JAPAN, no. 18, p.**
**6570 E 77**

(73) Proprietor: **TRW INC.**
**23555 Euclid Avenue**
**Cleveland Ohio 44117 (US)**

(72) Inventor: **Miller, Chauncey Stevens**
**5423 Manitowac Drive**
**Rancho Palos Verdes California 90274 (US)**

(74) Representative: **Allden, Thomas Stanley et al**
**A.A. THORNTON & CO. Northumberland House**
**303-306 High Holborn**
**London WC1V 7LE (GB)**

Courier Press, Leamington Spa, England.

## Description

This invention relates generally to digital modems, and, more particularly, to techniques for rapid modem carrier acquisition and synchronization. A modem, or modulator-demodulator, is a device widely used in the transmission of digital data signals over a telephone line or other communications link. At a transmitting end of the communications link, the modem modulates a high-frequency carrier signal in accordance with a specific modulation convention. Basically, the data signals to be transmitted are encoded as changes in frequency, amplitude or phase angle of the carrier signal. At the receiving end, another modem demodulates the carrier signal and reproduces the transmitted data.

Since the transmitting and receiving ends of the communications link are usually remote from each other, the receiving-end modem must be accurately synchronized with the incoming signal before it can be properly demodulated. Various synchronization and timing conventions have been developed, but this invention is concerned with modem operation in accordance with transmission conventions of the type established by a proposed United State federal standard, FED-STD-1007. This standard, which is widely followed by modem manufacturers, establishes a signal format for transmission at a rate of 9,600 bits per second, or 9.6 Kbps. The standard also defines a signal preamble format.

The preamble includes an AGC (automatic gain control) and baud synchronization period of 128 bauds, or 53 ms (milliseconds), followed by an equalizer training period of 348 bauds, or 160 ms. The baud synchronization period, as its name implies, allows the receiving-end modem to synchronize itself accurately to the baud rate of the incoming signal. The training period is used to "train" an adaptive equalizer in the receiving-end modem to respond properly to the incoming signals. During the training period, various parameters of the adaptive equalizer are adjusted to optimize its performance in the demodulation of the data-carrying signal that follows the preamble.

The present invention is concerned with a problem that arises in the operation of modems under a transmission standard of the same type as FED-STD-1007. The problem relates to use of the standard in what is known as half-duplex mode. In this mode of operation, a single communications link is used for transmission in both directions, but not at the same time. The proposed standard was intended for use in transmitting relatively large amounts of data in one direction. If bi-directional transmission was a requirement, two transmission links would be used, one for each direction. However, the standard is also applicable to the transmission of relatively small amounts of data in alternate directions at high speeds.

One such application is in the transmission of digitized speech data in telephone communications. Use of digital signals for speech transmission facilitates the scrambling of the data for security purposes. Even where security is not a factor, digitized speech signals are more easily compressed, for better utilization of communication links, and more easily stored and switched from line to line in complex communications networks. While digitized speech signals can be conveniently transmitted in a "full-duplex" mode, using a separate communications link for each direction of transmission, a fifty-percent line coat saving is effected if the half-duplex mode can be used.

A practical limitation of half-duplex operation for the transmission of speech is the time that is required to "turn the line around", so that the sending-end modem begins operating as a receiving-end modem, and vice versa. If the time for resynchronizing the receiving-end modem is unduly long, an objectionable delay occurs between the talking and listening phases of a telephone conversation.

In accordance with the standard, signals are transmitted in a quadrature amplitude modulation (QAM) format, wherein both the amplitude and the relative phase angle of the carrier signal are modulated. In the baud synchronization part of the preamble, a sequence of two signal phasors is transmitted in alternation, the two phasors having different amplitudes and phase angles. At this synchronization stage, a typical receiving-end modem would have in operation at least three adaptive control loops, namely a phase-lock loop, an automatic gain control loop, and a baud synchronization control loop. Because of the alternate phase shifts and amplitude shifts of the incoming phasors, the three control loops tend to interact in an unfavorable manner and to slow the acquisition process. These conventional techniques result in unacceptable delays in the acquisition time during switching of the transmission direction half-duplex mode.

It will be appreciated from the foregoing that there has been a need for significant improvement in the area of modems for use with transmission standards of the same type as FED-STD-1007. In particular, what is required is a technique for reducing the baud synchronization time to such a degree that the transmission standard is acceptable for use in the transmission of speech in half-duplex mode.

## Summary of the invention

The present invention resides in a modem apparatus, and a corresponding method, for improving the speed of acquisition of an incoming signal in one important respect: baud synchronization. In accordance with the invention, a receiving-end modem includes apparatus for fast carrier acquisition in accordance with claim 1.

More specifically, the means for determining which of the phasors is being received includes an arctangent circuit, a delay circuit, and two subtractor circuits. The arctangent circuit computes the phase angle of the received phasor from a pair of complex coordinates. The phase angle, which includes an error signal component, is delayed by one baud interval in the delay circuit and applied in both delayed and undelayed form to one of the subtractor circuits. The resulting phase difference, representing the change in phase angle during the last baud interval, is next compared to a fixed angle, in the other subtractor circuit. If the result of subtracting the fixed angle from the phase difference is positive, a particular one of the two expected phasors is indicated, and if the result is negative the other one of the expected phasors is indicated. The indicated phasor angle is then subtracted from the originally computed angle derived from the arctangent circuit, and the result is the error signal component for application to the phase-lock loop.

From Patents Abstracts of Japan, no. 10, page 6570 E77 & JP—A—52 74207, it is known to use an error signal derived from the last two received phasors and only approximately proportional to phase angle error. According to the present invention a precise error signal is derived for each received phasor, resulting in faster acquisition and locking to the band rate of the incoming signal.

In accordance with another aspect of the invention, a predictor circuit is coupled to the phase-lock loop, to compensate for time delays in the modem. The predictor circuit includes a time delay circuit providing a delay of approximately half of the time delay inherent in the adaptive equalizer of the modem.

It will be appreciated from the foregoing that the present invention represents a significant advance in the field of modems. In particular, the improved modem of the present invention includes apparatus for more rapidly acquiring an incoming signal by quickly identifying the received phasor during the baud synchronization. Other aspects and advantages of the present invention will become apparent from the following more detailed description, taken in conjunction with the accompanying drawings.

Brief description of the drawings

Figure 1 is a timing diagram showing the various segments of a signal preamble associated with data transmission standard FED-STD-1007;

Fig. 2a is a phasor diagram showing the phasors transmitted during the baud synchronization segment of the preamble of Fig. 1;

Fig. 2b is a phastor diagram showing the phasors transmitted during the equalizer training sequence of the preamble of Fig. 1;

Fig. 2c is a phasor diagram showing the possible phasor positions used for transmission of data signals after the preamble of Fig. 2;

Fig. 3 is a block diagram of a receiving-end modem together with means connected to the modem, in accordance with the invention, for more rapid signal acquisition during the baud synchronization period of the signal preamble.

Description of the preferred embodiments

As shown in the drawings for purposes of illustration, the present invention is principally concerned with improvements in modems. More particularly, the invention is concerned with the more rapid synchronization of a receiving-end modem with the incoming baud rate.

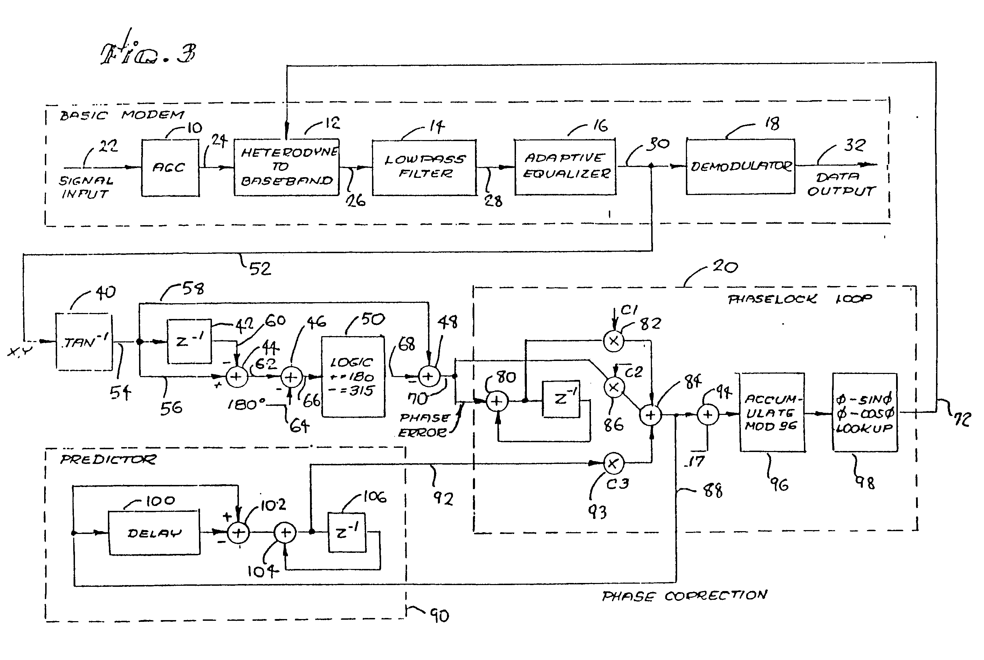

By way of background, the upper portion of Fig. 4 illustrates the basic structure of a receiving-end modem. The structure includes an automatic gain control (AGC) circuit 10, a heterodyne circuit 12, a low-pass filter 14, an adaptive equalizer 16, a demodulator 18, and a phase-lock loop 20. An incoming signal is applied over line 22 to the AGC circuit 10, the output of which is applied over line 24 to the heterodyne circuit 12, which produces a baseband output signal on line 26. This output signal is low-pass filtered in the filter 14, and the filtered output on line 28 is passed to the adaptive equalizer 16, the output from which is transmitted over line 30 to the demodulator 18. Output data from the modem 18 is obtained on line 32. The phase-lock loop 20, in response to the timing of demodulated signals input on line 34, generates signals on line 36 to the heterodyne circuit 12, effectively locking the demodulation process to the carrier frequency of the incoming signal.

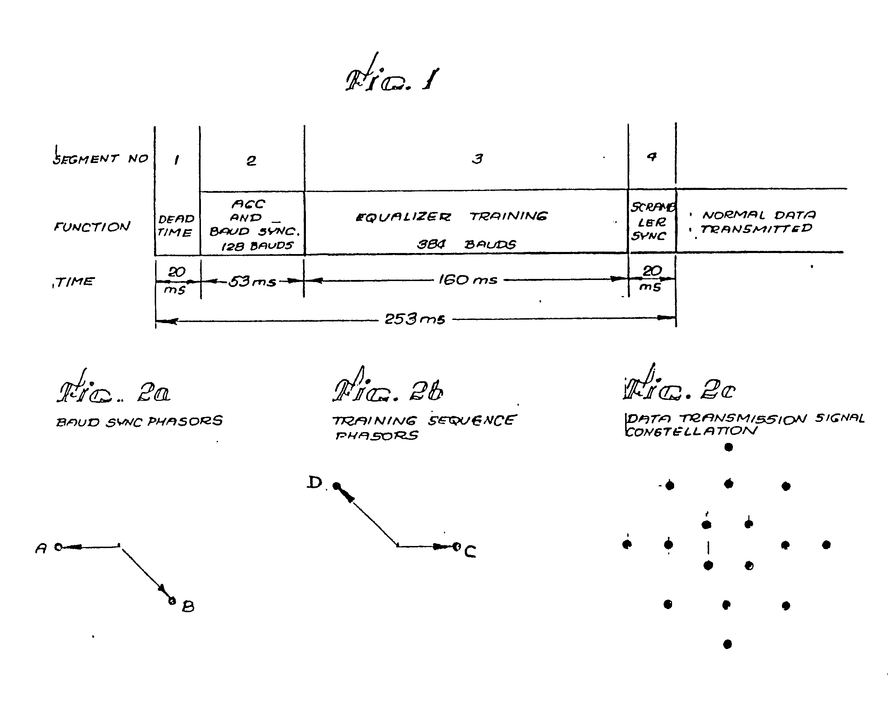

Before data can be transmitted and properly interpreted in the modem, a signal preamble is first transmitted, and used for purpose of synchronization and timing. Fig. 1 shows the format of a modem signal preamble in accordance with United States federal standard FED-STD-1007. It will be observed that the preamble includes a first segment of 20 milliseconds (ms) dead time, a second segment of 53 ms for AGC and baud synchronization, a third segment of 160 ms for equalizer training, and a fourth segment of 20 ms for scrambler synchronization. The present invention is concerned only with the second and third segments, for baud synchronization and equalizer training, respectively.

During baud synchronization, comprising 128 baud intervals, alternating phasors of the type shown at A and B in Fig. 2a are transmitted. Each phasor represents the amplitude and relative phase angle of the carrier signal during the baud interval in which it is transmitted. It will be seen that phasor A has an angle of 180 degrees and phasor B an angle of 315 degrees. In order for the modem to synchronize with the baud rate of the incoming signal, it must be rapidly responsive to the alternating sequence of A and B phasors. Unfortunately, the AGC circuit 10 and the phase-lock loop 20 tend to interact with the baud synchronization process and slow its completion. Slowness of baud rate synchronization is of little consequence in the transmission of large amounts of data in one direction, but is highly significant in other applications of modems, such as the transmission of digitized speech signals in half-duplex mode. In such cases, the acquisition time is extremely important, since an unduly long acquisition time will introduce an objectionable delay between transmitting and receiving data.

In accordance with the invention, and as shown in Fig. 3, means are provided for identifying which of the phasors A and B is currently being received at the modem. More specifically, the means for identifying the baud synchronization phasor includes an arctangent circuit 40, a baud interval delay circuit 42, three subtractor circuits 44, 46 and 48, and an additional logic circuit 50. A complex signal indicative of the current phasor position and magnitude is derived over line 52 from the adaptive equalizer and applied to the arctangent circuit 40, which yields the corresponding angle value on line 54 to the delay circuit 42. This angle value is also applied over line 56 to a positive input of subtractor circuit 44 and over line 58 to a positive input of subtractor circuit 48. The output of the delay circuit 42, on line 60, is applied as a negative input to the subtractor circuit 44, which operates to yield an equivalent positive result on line 62. Thus, if the result of the subtraction, which represents the change in phase angle from the previous baud interval to the present baud interval, is −135 degrees, for example, it is expressed as the equivalent positive value −225 degrees. In other words, the subtraction in subtractor 44 is performed on a modulo-360-degrees basis.

This positive phase angle difference is transmitted over line 62 to the second subtractor 46, the other input of which is a value of 180 degrees, as indicated at 64. The result on line 66 will be either positive or negative, depending on which of the phasors A or B is currently present. The logic 50 selects for output on line 68 either the angle 180 degrees of phasor A or the angle 315 degrees of phasor B. The selected value is subtracted from the actually received phase angle, in the third subtractor circuit 48, which yields an error signal on line 70 for application to the phase-lock loop 20.

By way of example, if the angle signal on line 54 is 180 degrees plus a small error component, then the previous angle on line 60 will be 315 degrees plus the error component. The result of the subtraction in subtractor 44 will be 225 degrees plus the error component. Subtraction of 180 degrees leaves a result of +45 degrees, again plus the error component indicating that phasor A is to be selected. If, instead, the angle signal on line 54 is approximately 315 degrees and that on line 60 is approximately 180 degrees, the result of the subtraction in subtractor 44 will be approximately 135 degrees. After subtraction of 180 degrees, this leaves a result of approximately −45 degrees, indicating that phasor B is to be selected.

The phase-lock loop 20 can be of any appropriate design, such as the one shown in detail in Fig. 3, yielding a set of sine and cosine signals on line 72 to the heterodyne circuit 12. The Fig. 3 phase-lock loop includes a first summing circuit 80 for summing the current error signal on line 70 and a delayed version of the output of the summing circuit. The output of the summing circuit 80 is multiplied by a parameter C1 in multiplier 82, and applied as an input to a second summing circuit 84. The error signal on line 70 is also multiplied by a parameter C2 in multiplier 86, and then input to the

second summing circuit 84. The output of this summing circuit 84 is connected over line 88 to a predictor circuit 90. The predictor output is applied as a third input to the summing circuit 84, over line 92, after multiplication by a factor C3 in multiplier 93. The output of the second summing circuit 84 is increased by a constant in a third summing circuit 94, then applied to an accumulation circuit 96, and thence to a hook-up circuit 98 to obtain sine and cosine values for application to the heterodyne circuit 12.

The predictor circuit 90 is conventional in design, and includes a delay circuit 100, a subtractor circuit 102, a summing circuit 104, and a baud interval delay circuit 106. The input on line 88 is applied to the delay circuit 100 and positively to the subtractor 102, the negative input of which is derived from the output of the delay circuit 100. The output of the subtractor 102 is applied to the summing circuit 104, the output of which is in turn connected to output line 92 and to the baud interval delay 106. The delay 106 provides the second input for the summing circuit 104. The purpose of the predictor circuit 90 is to compensate for the relatively long time delays in the modem, particularly in the adaptive equalizer 16.

Detection of the start of the equalizer training sequence is the subject matter of divisional application EP—A—87 105 813.7, publication number 238100.

It will be appreciated from the foregoing description that the present invention represents a significant advance in the field of high-speed modems. In particular, the invention provides a technique for acquiring a received signal rapidly and shortening the acquisition time needed to operate effectively in a half-duplex mode.

**Claims**

1. Apparatus for fast carrier acquisition in a receiving-end modem, comprising:
means (40—68) for computing a phase error signal from the actual angle of the phasor being received and a further phasor value, and
a phase-lock loop (20) for computing, from the phase error signal, sine and cosine values for use in demodulating the carrier; characterised in that
said computing means includes means (40, 42, 44, 46, 50) for determining which of two alternate phasors is currently being received at the modem during a baud synchronisation period, and means (48, 58) for computing a phase error signal from the actual angle of the phasor being received and the expected angle of the phasor being received.

2. Apparatus as set forth in claim 1, wherein said means for determining which of the phasors is being received includes:
an arctangent circuit (40), for providing a signal indicative of the actual angle of the phasor being received;
a delay circuit (42) for providing a signal indicative of the actual angle of the phasor received one baud interval earlier;
means (44) for subtracting the signals indicative of the phase angle and delayed phase angle to obtain a phase angle difference signal;

means (46) for comparing the phase angle difference signal with a signal indicative of a fixed angle, to obtain a signal indicative of which of the two alternate phasors is currently being received.

3. Apparatus as set forth in claim 2, wherein:

the two alternate phasors have angles of 180 degrees and 315 degrees;

the phase angle difference has one of the two possible values of approximately 135 degrees and approximately 225 degrees; and

the fixed angle is 180 degrees, whereby said means for comparing yields a result of approximately +45 degrees or approximately −45 degrees, depending on which phasor is being received.

4. Apparatus as set forth in claim 2, wherein said phase-lock loop includes a predictor circuit (90) to compensate for time delays in the modem, and thereby stabilize operation of the apparatus.

5. A method for fast carrier acquisition in a receiving-end modem, comprising the steps of:

determining which of two alternate phasors is currently being received at the modem during a baud synchronisation period;

computing a phase error signal from the actual angle of the phasor being received and the expected angle of the phasor being received; and deriving from the phase error signal, sine and cosine values for use in demodulating the carrier.

6. A method as set forth in claim 5, wherein said determining step includes:

generating in an arctangent circuit an angle signal indicative of the actual angle of the phasor being received;

delaying the signal generated in said generating step, to provide a delayed angle signal indicative of the actual phasor angle received one baud interval earlier;

subtracting the angle signal from the delayed angle signal to provide a phase angle difference signal; and

comparing the phase angle difference signal with a signal indicative of a fixed angle, to obtain an indication of which of the two alternate phasors is currently being received.

7. A method as set forth in claim 6, wherein:

the two alternate phasors have angles of 180 degrees and 315 degrees;

the phase angle difference has one of the two possible values of approximately 135 degrees and approximately 225 degrees; and

the fixed angle is 180 degrees, whereby said means for comparing yields a result of approximately +45 degrees or approximately −45 degrees, depending on which phasor is being received.

8. A method as set forth in claim 7, wherein said step of deriving sine and cosine values is performed in a phase-lock loop and includes compensating for time delays in the modem.

**Patentansprüche**

1. Vorrichtung zur schnellen Träger-Erfassung in einem Empfangsmodem mit Einrichtungen (40—68) zum Ermitteln eines Phasen-Fehlersignales aus dem gegebenen Winkel des Zeigers, der empfangen wird, und einem weiteren Zeigerwert, und mit einem Phasenregelkreis (20) zum Berechnen von Sinaus- und Kosinuswertern aus dem Phasen-Fehlersignal, welche Werte zum Demodulieren des Trägers verwendet werden, dadurch gekennzeichnet,

daß die genannten Einrichtungen zum Ermitten Einrichten (40, 42, 44, 46, 50) aufweisen, um zum bestimmen, welcher der beiden unterschiedlichen Zeiger gerade während einer Baud-Synchronisationsperiode im Modem empfangen wird, und Einrichtungen (48, 58) zum Berechnen eines Phasen-Fehlersignals aus dem tatsächlichen Winkel des empfangenen Zeigers und dem zu erwartendem Winkel des empfangen Zeigers.

2. Vorrichtung gemäß Anspruch 1, wobei die Einrichtungen zum Bestimmen des gerade empfangenen Zeigers folgende Einrichtungen aufweisen;

einen Arctangens-Schaltkreis (40), um ein Signal zu erzeugen, welches den tatsächlichen Winkel des empfangenen Zeigers anzeigt;

einen Verzögerungsschaltkreis (42) zum Erzeugen eines Signals, das den tatsächlichen Winkel des Zeigers anzeigt, der ein Baud-Intervall zuvor empfangen worden ist;

Einrichtungen (44) zum Subtrahieren der die Phasenwinkel anzeigenden Signale und eines verzögerten Phasenwinkels, um ein Phasen-Differenzsignal zu erhalten;

Einrichtungen (46) zum Vergleichen d Phasenwinkel des Differenzsignals mit einem Signal, welches einen festen Winkel anzeigt, um ein Signal zu erhalten, das anzeigt, welcher der beiden verschiedenen Zeiger gerade empfangen wird.

3. Vorrichtung nach Anspruch 2, wobei die beiden verschiedenen Zeiger Winkel von 180° und 315° aufweist; die Phasen-Winkeldifferenz einen der beiden möglichen Werte von etwa 135° und etwa 225° aufweist und der feste Winkel 180° beträgt wobei die genannten Vergleichseinrichtungen in Abhängigkeit davon welcher Zeiger gerade empfangen wird, ein Ergebnis von etwa +45° oder etwa −45° liefern.

4. Vorrichtung nach Anspruch 2, wobei der Phasenregelkreis eine Vorhersageschalting (90) aufweist, um Zeitverzögerungen in dem Modem zu kompensieren und dadurch den Betrieb der Vorrichtung zu stabilisieren.

5. Verfahren zur schnellen Trägererfassung in einem Empfangsmodem mit folgenden Schritten:

es wird bestimmt, welcher von zwei verschiedenen Zeigern gerade während einer Baud-Synchronisationsperiode im Modem empfangen wird;

es wird ein Phase-Fehlersignal aus dem tatsächlichen Winkel des empfangenen Zeigers und dem erwarteten Winkel des empfangenen Zeigers berechnet; und

es werden aus dem Phasen-Fehlersignal Sinus- und Kosinuswerte zur Verwendung bei der Demodulation des Trägers abgeleitet.

6. Verfahren nach Anspruch 5, wobei die genannten Bestimmung folgenden Schritte vorsieht: -

es wird in einer Arctangens-Schaltung ein Winkelsignal erzeugt, welches den tatsächlichen Winkel des empfangenen Zeigers angibt;

es wird das in dieser Erzeugungsschaltung erzeugte Signal verzögert, um ein verzögertes Winkelsignal zu erhalten, welches den tatsächlichen Zeigerwinkel anzeigt, der ein Baud-Intervall zuvor empfangen worden ist;

es wird das Winkelsignal von dem verzögerten Winkelsignal substrahiert, um ein Phasendifferenzsignal zu erhalten; und

es wird das Phasenwinkel-Differenzsignal mit einem Signal verglichen, das einen feststehenden Winkel anzeigt, um eine Information darüber zu gewinnen, welcher der beiden unterschiedlichen Zeiger gerade empfangen wird.

7. Verfahren nach Anspruch 6, wobei

—die zwei unterschiedlichen Zeigerwinkel von 180° und 315° aufweisen;

—die Phasen-Winkeldifferenz einen der beiden Werte von etwa 135° und etwa 225° aufweist; und

—der feste Winkel 180° beträgt, wobei die genannten Vergleichseinrichtungen ein Ergebnis von etwa +45° oder etwa —45° liefern, je nach dem welcher Zeiger empfangen wird.

8. Verfahren nach Anspruch 7, wobei der genannten Schritt zum Ableiten von Sinus- und Kosinuswerten in einem Phasenregelkreis ausgeführt wird und Zeitverzögerungen in dem Modem kompensiert werden.

**Revendications**

1. Dispositif d'acquisition rapide du signal porteur dans un modem d'extrémité réceptrice, comprenant:

des moyens (40—68) destinés à calculer un signal d'erreur de phase à partir de l'angle réel du vecteur qui est reçu et d'une valeur de vecteur supplémentaire,

et une boucle de verrouillage de phase (20), pour calculer, à partir du signal d'erreur de phase, des valeurs de sinus et de cosinus à utiliser dans la démodulation du signal porteur; caractérisé en ce que

les moyens de calcul comprennent des moyens (40, 42, 44, 46, 50) destinées à déterminer le vecteur, parmi deux vecteurs alternés, qui est reçu dans le modem au moment présent pendant une période de synchronisation de baud, et des moyens (48, 58) destinés à calculer un signal d'erreur de phase à partir de l'angle réel du vecteur qui est reçu et de l'angle prévu pour le vecteur qui est reçu.

2. Dispositif selon la revendication 1, dans lequel les moyens de détermination de celui des vecteurs qui est reçu comprennent:

un circuit de calcul d'arc tangente (40), destiné à produire un signal représentatif de l'angle réel du vecteur qui est reçu;

un circuit de retard (42) destiné à produire un signal représentatif de l'angle réel du vecteur qui a été reçu un intervalle de baud plus tôt;

des moyens (44) destinés à soustraire les signaux représentatifs de l'angle de phase et de l'angle de phase retardé, pour obtenir un signal de différence d'angle de phase;

des moyens (46) destinés à comparer le signal d'angle de phase avec un signal représentatif d'un angle fixe, pour obtenir un signal représentatif de celui des deux vecteurs alternés qui est reçu au moment considéré.

3. Dispositif selon la revendication 2, dans lequel:

les deux vecteurs alternés ont des angles de phase de 180 degrés et 315 degrés;

la différence d'angle de phase a une valeur parmi les deux valeurs possibles d'approximativement 135 degrés et d'approximativement 225 degrés; et

l'angle fixe est de 180 degrés, grâce à quoi les moyens de comparaison donnent un résultat approximativement égal à +45 degrés ou approximativement égal à —45 degrés, selon celui des vecteurs qui est reçu.

4. Dispositif selon la revendication 2, dans lequel la boucle de verrouillage de phase comprend un circuit prédicteur (90) destiné à compenser des retards dans le modem, et à stabiliser ainsi le fonctionnement du dispositif.

5. Un procédé pour l'acquisition rapide d'un signal porteur dans un modem d'extrémités réceptrice, comprenant les opérations suivantes:

on détermine celui de deux vecteurs alternés qui est reçu au moment considéré dans le modem pendant une période de synchronisation de baud;

on calcule un signal d'erreur de phase à partir de l'angle réel du vecteur qui est reçu et de l'angle prévu du vecteur qui est reçu; et

on élabore à partir du signal d'erreur de phase, des valeurs de sinus et de cosinus pour l'utilisation dans la démodulation du signal porteur.

6. Un procédé selon la revendication 5, dans lequel l'opération de détermination comprend:

la génération, dans un circuit de calcul d'arc tangente, d'un signal d'angle représentatif de l'angle réel du vecteur qui est reçu;

l'application d'un retard au signal qui est produit par l'opération de génération, pour obtenir un signal d'angle retardé représentatif de l'angle réel du vecteur qui a été reçu un intervalle de baud plus tôt;

la soustraction du signal d'angle par rapport au signal d'angle retardé, pour produire un signal de différence d'angle de phase; et

la comparaison du signal de différence d'angle de phase avec un signal représentative d'un angle fixe, pour obtenir une indication de celui des deux vecteurs alternés qui est reçu au moment considéré.

7. Un procédé selon la revendication 6, dans lequel:

les deux vecteurs alternés ont des angles de 180 degrés et de 315 degrés;

la différence d'angle de phase a une valeur parmi les deux valeurs possibles d'approximativement 135 degrés et d'approximativement 225 degrés; et

l'angle fixe est de 180 degrés, ce qui fait que les moyens de comparaison donnent un résultat d'environ +45 degrés ou d'environ −45 degrés, en fonction du vecteur qui est reçu.

8. Un procédé selon la revendication 7, dans lequel l'opération de calcul de valeurs de sinus et de cosinus est effectuée dans une boucle de verrouillage de phase et comprend la compensation de retards dans le modem.

# Fig. 1

| SEGMENT NO | 1 | 2 | 3 | 4 | |
|---|---|---|---|---|---|
| FUNCTION | DEAD TIME | ACC AND BAUD SYNC. 128 BAUDS | EQUALIZER TRAINING 384 BAUDS | SCRAM LER SYNC | NORMAL DATA TRANSMITTED |
| TIME | 20 mS | ←53 ms→ | ← 160 ms → | 20 mS | |

← 253 ms →

## Fig. 2a

BAUD SYNC PHASORS

## Fig. 2b

TRAINING SEQUENCE PHASORS

## Fig. 2c

DATA TRANSMISSION SIGNAL CONSTELLATION

0 134 860

Fig. 3

0 134 860